**Europäisches Patentamt**

**European Patent Office**

**Office européen des brevets**

(19)

(11) Numéro de publication : **0 308 474 B1**

# (12) FASCICULE DE BREVET EUROPEEN

(45) Date de publication du fascicule du brevet :
**19.08.92 Bulletin 92/34**

(51) Int. Cl.⁵ : **B62B 15/00,** B62K 21/00

(21) Numéro de dépôt : **88903271.0**

(22) Date de dépôt : **05.04.88**

(86) Numéro de dépôt international :
**PCT/FR88/00165**

(87) Numéro de publication internationale :
**WO 88/07467 06.10.88 Gazette 88/22**

(54) **ENGIN BICYCLE A ROUES AVANT ET ARRIERE DIRECTRICES.**

(30) Priorité : **03.04.87 FR 8704683**

(43) Date de publication de la demande :
**29.03.89 Bulletin 89/13**

(45) Mention de la délivrance du brevet :
**19.08.92 Bulletin 92/34**

(84) Etats contractants désignés :
**AT BE CH DE FR GB IT LI LU NL SE**

(56) Documents cités :
**FR-A- 340 896**
**FR-A- 2 438 570**
**GB-A- 2 135 950**
**US-A- 3 421 420**
**US-A- 4 445 699**
**US-A- 4 555 122**

(73) Titulaire : **SOCIETE FINANCIERE**
**D'EXPANSION SA**
**6, rue Nobel**
**F-29000 Quimper (FR)**
Titulaire : **Sailly, Marc**
**53 route de Kergadona**
**F-29000 Quimper (FR)**
Titulaire : **CARN, Rozenn Michèle Francoise**
**17, cite de Kerguelen**
**F-29000 Quimper (FR)**
Titulaire : **CARN, Gwendoline Marie Karine**
**17, cite de Kerguelen**
**F-29000 Quimper (FR)**

(72) Inventeur : **CARN, Rozenn Michele Francoise**
**17 cite de Kerguelen**
**F-29000 Quimper (FR)**
Inventeur : **CARN, Gwendoline Marie Karine**
**17 cite de Kerguelen**
**F-29000 Quimper (FR)**

(74) Mandataire : **Viard, Jean**
**Cabinet VIARD 28 bis, avenue Mozart**
**F-75016 Paris (FR)**

EP 0 308 474 B1

## Description

La présente invention a pour objet un engin bicycle à roues avant et arrière directrices dont le trajectoire peut être contrôlée par inclinaison latérale de la nacelle supportant le passager, à laquelle chaque roue est assemblée par deux bras pivotant autour d'axes solidaires de la nacelle d'une part, et sur les extrémités de l'axe de rotation de chaque roue d'autre part, l'écartement des axes verticaux de la nacelle et de ceux de la roue étant sensiblement différents, de manière à définir un trapèze qui peut être déformable en fonction de l'inclinaison de la nacelle.

Des engins bicycle à roues avant et arrière directrices sont connues des documents US-A 4555122, US-A 4445699, FR-A- 2438570 et GB-A- 2135950.

Un système de suspension d'une roue comportant deux bras pivotés autour d'axes solidaires d'une nacelle d'une part, et sur les extrémités de l'axe de rotation de la roue d'autre part, est décrit dans le document FR-A- 340896.

La présente invention a pour objet un engin bicycle qui peut être dirigeable par inclinaison latérale de la plateforme, plateau ou nacelle, et dont le rayon de giration peut être réduit grâce à un double système directif suspendu des deux roues avant et arrière.

Selon l'invention, le bicycle constitué d'un plateau recevant un passager, monté sur au moins deux roues avant et arrière, est caractérisé en ce que les roues sont reliées au plateau par des bras montés pivotants autour d'axes solidaires du plateau d'une part, et sur les extrémités de l'axe d'une roue d'autre part, en définissant un trapèze.

D'autres caractéristiques et avantages de la présente invention apparaîtront au cours de la description qui va suivre de modes particuliers de réalisation donnés uniquement à titre d'exemples non limitatifs, en regard des dessins qui représentent :
- la figure 1, une vue de dessus, en perspective, d'un bicycle selon l'invention ;
- la figure 2, une vue latérale du bicycle ;
- la figure 3, le schéma du principe de braquage de chaque roue ;
- la figure 4, une vue de face du bicycle ;
- la figure 5, une vue par-dessous, en perspective, du bicycle équipé d'une tringlerie de liaison des roues ;
- la figure 6, une vue en perspective du bicycle équipé d'un guidon directionnel, d'un élément de carrosserie arrière et d'un filet antidérapant ;
- la figure 7, une vue en perspective du bicycle équipé d'une voile symétrique.

Sur les dessins, les rayons de roues n'ont pas été représentés dans un souci de clarification.

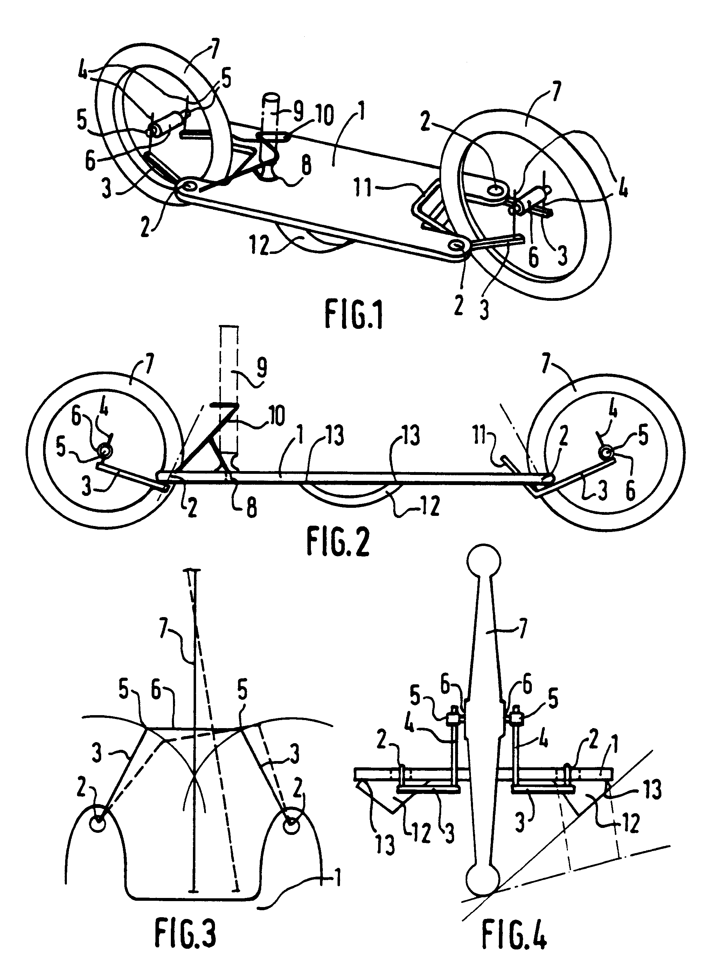

Sur la figure 1, le plateau 1, ou nacelle, est échancré à chaque extrémité pour le passage de la roue correspondante. De part et d'autre de cette échancrure sont aménagés des logements verticaux recevant les axes 2 dont le degré d'écartement par rapport à la verticale peut être contrôlé par un système accessoire.

Autour de chaque axe 2, pivote horizontalement un bras 3 en forme de manivelle portant une tige verticale 4 coulissant dans un curseur 5 perpendiculairement à l'axe 6 des roues 7. La position du curseur 5 sur la tige 4 est contrôlée par vissage. L'espacement des curseurs 5 demeurant plus faible que celui des axes 2, on comprend que la roue 7 pivote lorsque les bras 3 se déplacent latéralement, quand s'incline le plateau (1) en particulier. La figure 3 illustre le principe 3 de cette direction par trapèze.

Le plateau 1 est destiné à recevoir au point 8 une embase 9 de gréement pour la propulsion vélique de l'ensemble. Le gréement étant de type planche à voile, sa liberté est totale autour du point 8. Le bâti 10, en forme de W, a pour but de limiter cette liberté en solidarisant le plateau 1 au gréement 9 lorsque celui-ci est repoussé vers l'avant. Le passager a alors plus de facilité pour déplacer les pieds sur le plateau au moment des changements d'amures notamment.

A l'arrière du plateau 1 est représenté un frein 11 composé d'un cadre pivotant autour d'un axe horizontal supporté par le plateau 1. La partie supérieure du cadre pouvant être actionnée par le pied du passager, la partie inférieure vient prendre appui sur la bande de roulement de la roue 7. A cette fin, cette partie inférieure est munie d'un revêtement de friction non abrasif tel qu'un tuyau caoutchouté. Il est à noter que la bande de roulement reste écartée du plateau de la même valeur lors des virages, grâce à la direction par trapèze, et que le degré de freinage reste le même quelle que soit la position de la roue 7 le long de la tige rectiligne qui constitue l'élément de freinage. Sur la figure 1 enfin est représenté un des patins latéraux 12 dont le but est d'offrir une surface de glissement aussi peu rugueuse que possible sur le sol lorsque le plateau est incliné par le passager. Si celui-ci veut limiter cette inclinaison, il peut modifier la position des patins, de façon à ce qu'ils prennent plus rapidement contact avec le sol. Le mode d'exécution ici retenu est réalisé à l'aide de feuilles cintrées coniquement, en polyéthylène par exemple, dont les points 13 de fixation au plateau, situés du côté extérieur, sont rapprochables l'un de l'autre pour un même patin. On voit que, plus ces points sont rapprochés, et plus la feuille se cintre suivant une courbure plus importante sur le bord extérieur que sur le bord intérieur, lui donnant à présenter une surface de contact optimum avec le sol quel que soit le cintre, en celà aidée par la plasticité de l'ensemble sous la charge.

La figure 2 représentant l'ensemble de profil permet de mieux saisir la forme et la position des accessoires précités, la butée de mât 10, le frein 11 et le patin 12. Elle illustre également l'inclinaison des axes 2 par rapport à la verticale suivant un angle de chasse provoquant le rappel des roues en position axiale, lorsque le plateau est replacé en position horizontale. La figure 4 montre tout particulièrement la variation de position des patins 12 entre deux positions extrêmes, l'une en traits pleins correspondant à l'inclinaison maximum du plateau, l'autre en pointillés correspondant à l'inclinaison minimum.

La figure 3 montre en traits pleins la position axiale de la roue 7 et celle correspondante du trapèze 2, 3, 5, 6, 5, 3, 2, par rapport au plateau 1, et en pointillés, la position de la roue braquée et celle, correspondante, du trapèze.

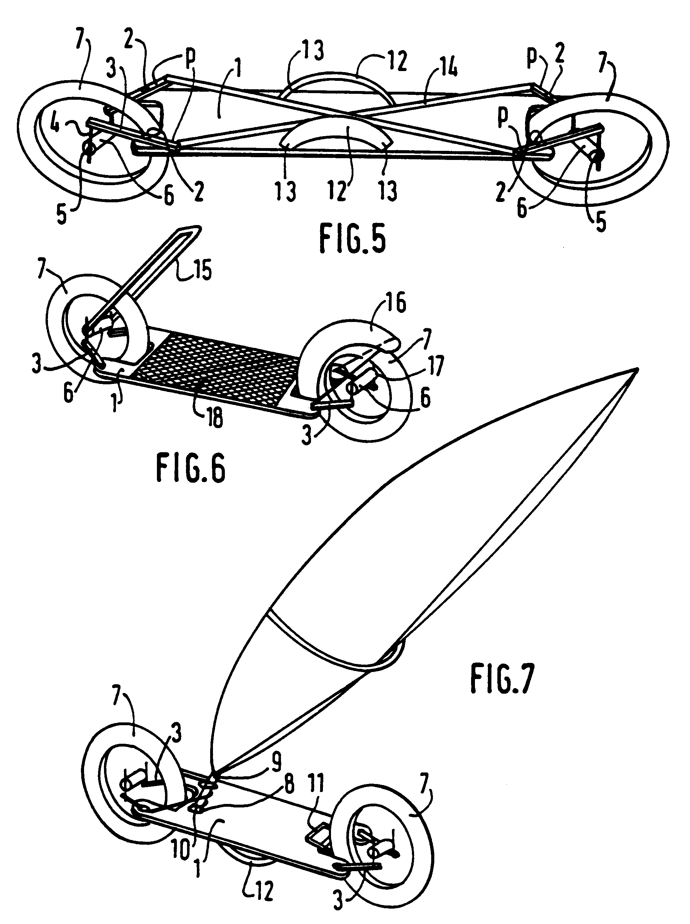

Sur la figure 5, apparaît un montage permettant de solidariser les deux roues et de raidir le plateau quand il est sous charge. A cet effet, chaque bras 3 est prolongé au-delà de l'axe 2 par une partie P, à l'extrémité de laquelle pivote horizontalement une tringle 14 reliée par l'autre extrémité à la partie P du bras diamétralement opposé. On voit que les deux roues avant et arrière occupent des positions identiques. Ceci est particulièrement utile lorsque le bicycle est mû par le vent dont la poussée latérale est plus importante sur la roue arrière du fait que le centre de voilure est généralement porté vers l'arrière. Les tringles 14 jouent par ailleurs deux autres rôles en raidissant le plateau 1 et en facilitant la rotation des bras 3. En effet, elles limitent l'écartement des extrémités inférieures des axes 2 et réduisent donc la flexion du plateau 1. D'autre part, en tendant à maintenir les bras 3 en position horizontale, elles réduisent la friction de ceux-ci sur leur axe de rotation 2. Sur la figure 5, on voit par ailleurs comment les patins 12 prennent place sous le plateau 1, de part et d'autre des tringles 14.

Sur la figure 6, un guidon directionnel 15 est relié à la roue avant par les extrémités 5 de l'axe 6, constitué de deux branches parallèles reliées par une partie horizontale, le guidon 15 pivotant autour de l'axe 6. Il permet de provoquer le braquage de la roue avant par rotation de la partie horizontale parallèlement à l'axe 6 et par poussée latérale des branches parallèles. La carrosserie 16 enveloppant la roue arrière est soutenue par un arceau 17 lui permettant de résister à des efforts importants. Cette carrosserie 16 joue le rôle de garde-boue, mais aussi de point d'appui pour le passager selon qu'il veut s'asseoir dessus ou effectuer des acrobaties, avec ou sans gréement. Elle est prolongée au-delà de la verticale passant par le point d'appui au sol de la roue arrière, de façon à permettre au passager de cabrer le bicycle lorsqu'il porte tout ou partie de son poids à l'extrémité de la pièce de carrosserie 16.

Le plateau 1 est recouvert d'un filet résistant 18, du type filet de chalut par exemple, qui procure un état de surface antidérapant, ce qui est particulièrement appréciable lorsque celui-ci est mouillé ou recouvert de sable ou de boue. Les mailles de ce filet 18 recouvrant le dessous du plateau 1 peuvent être utilisées pour retenir les extrémités des patins 12 qui s'y engagent, à chaque maille correspondant un cintrage donné pour chaque patin 12.

Sur la figure 7, est représenté un bicycle équipé d'un gréement symétrique de type ARC (Marque déposée). Pour permettre au gréement de s'adapter à la butée 10, en forme de W, ledit gréement est prolongé à la base par une pièce axiale 9 jouant le même rôle qu'une embase de mât unique.

Il va de soi que de nombreuses variantes peuvent être introduites notamment par substitution de moyens techniquement équivalents sans pour autant sortir du cadre de l'invention comme précisé dans les revendications suivantes.

**Revendications**

1. Engin Bicycle constitué d'un plateau (1) recevant un passager, monté sur deux roues (7) avant et arrière, caractérisé en ce que les roues (7) sont reliées au plateau (1) par des bras (3) montés pivotants d'une part autour d'axes (2) solidaires du plateau (1), et d'autre part sur les extrémités (5) de l'axe (6) d'une roue (7) en définissant un trapèze.

2. Bicycle selon la revendication 1, caractérisé en ce que la petite base du trapèze est l'axe (6) de la roue (7).

3. Bicycle selon l'une des revendications 1 ou 2, caractérisé en ce que les axes de pivotement (2, 4) des bras de liaison (3) peuvent être inclinés par rapport à l'horizontale.

4. Bicycle selon l'une des revendications 1, 2 ou 3, caractérisé en ce que les curseurs (5) reliant les axes (6) des roues (7) aux axes (4) des bras (3) sont ajustables sur les axes (4).

5. Bicycle selon l'une quelconque des revendications précédentes, caractérisé en ce qu'un bran (3) prolongé au-delà de l'axe (2) par un prolongement( P), est relié au bras (3) diamétralement opposé par une tringle ou un câble (14) pivotant librement à l'extrémité des prolongements (P).

6. Bicycle selon l'une quelconque des revendications 1 à 4, caractérisé en ce que le plateau (1) porte une embase (8) pour un mât articulé (9), une butée (10) permettant le blocage du mât.

7. Bicycle selon l'une quelconque des revendications 1 à 4, caractérisé en ce qu'il comporte un frein (11) pivotant horizontalement à l'arrière du plateau (I) pour venir au contact de la bande de roulement de la roue (7) sous la pression du pied du passager.

8. Bicycle selon l'une quelconque des revendications 1 à 4, caractérisé en ce qu'il comporte au moins un patin (12) fixé latéralement sous le plateau (1) et reposant à plat sur le sol lorsque le plateau est incliné.

9. Bicycle selon la revendication 8, caractérisé en ce que les patins (12) peuvent être abaissés sous le plateau (1).

10. Bicycle selon l'une des revendications 8 ou 9,

EP 0 308 474 B1

caractérisé en ce que les patins (12) sont constitués de feuilles dont le rapprochement des points de fixation (13) sous le plateau provoque le cintrage.

11. Bicycle selon l'une quelconque des revendications précédentes, caractérisé en ce qu'il comporte un guidon (15) pivotant autour de l'axe (6) d'une roue (7) pour contrôler la direction.

12. Bicycle selon la revendication 11, caractérisé en ce que le guidon comporte deux branches parallèles et une branche commune parallèle à l'axe (6) de la roue (7).

13. Bicycle selon l'une quelconque des revendications précédentes, caractérisé en ce qu'il comporte une pièce de carrosserie (16) enveloppant la roue arrière (7) pour servir de point d'appui au passager et se prolongeant au-delà de la verticale passant par le point d'appui au sol de la roue arrière.

14. Bicycle selon l'une quelconque des revendications précédentes, caractérisé en ce que le plateau (1) est recouvert d'un filet (18) antidérapant dans les mailles duquel n'engagent les extrémités des patins (12).

**Patentansprüche**

1. Zweiradgerät mit einer Platte (1) zur Aufnahme eines Passagiers, die an zwei vorne und hinten angeordneten Rädern (7) angebracht ist, gekennzeichnet dadurch, daß die Räder (7) über Arme (3) an der Platte (1) angebracht sind, die einerseits schwenkbar um fest mit der Platte (1) verbundene Achsen (2) und andererseits schwenkbar um die Enden (5) der Achse (6) eines Rades angebracht sind und ein Trapez bilden.

2. Zweirad nach Anspruch 1, dadurch gekennzeichnet, daß die kleinere Basis des Trapezes die Achse (6) des Rades (7) ist.

3. Zweirad nach Anspruch 1 oder 2, dadurch gekennzeichnet, daß die Schwenkachsen (2, 3) der Verbindungsarme (3) zur Horizontalen geneigt werden können.

4. Zweirad nach Anspruch 1, 2 oder 3, dadurch gekennzeichnet, daß die Schieber (5), die die Achsen (6) der Räder (7) mit den Achsen (4) der Arme (3) verbinden, auf den Achsen (4) verstellbar sind.

5. Zweirad nach einem der vorhergehenden Ansprüche, dadurch gekennzeichnet, daß ein über die Achse (2) mit einer Verlängerung (P) hinausstehender Arm (3) mit dem diametral gegenüberliegenden Arm (3) über ein Gestänge oder ein Seil (14) verbunden ist, das frei schwenkbar am Ende der Verlängerung (P) angeordnet ist.

6. Zweirad nach einem der Ansprüche 1 bis 4, dadurch gekennzeichnet, daß die Platte (1) eine Befestigungsfläche (8) für einen gebogenen Mast (9) trägt, wobei ein Anschlag (10) die Blockierung des Mastes erlaubt.

7. Zweirad nach einem der Ansprüche 1 bis 4, dadurch gekennzeichnet, daß eine Bremse (11) vorgesehen ist, die horizontal schwenkbar am Ende der Platte (1) sitzt, um unter dem Druck des Fußes eines Passagiers in Kontakt mit der Lautfläche des Rades (7) zu kommen.

8. Zweirad nach einem der Ansprüche 1 bis 4, dadurch gekennzeichnet, daß mindestens eine Gleitkufe (12) vorgesehen ist, die seitlich unter der Platte (1) befestigt ist und sich flach auf dem Boden auflegt, wenn die Platte schräggestellt ist.

9. Zweirad nach Anspruch 8, dadurch gekennzeichnet, daß die Gleitkufen (12) unter die Platte (1) abgesenkt werden können.

10. Zweirad nach einem der Ansprüche 8 oder 9, dadurch gekennzeichnet, daß die Gleitkufen (12) jeweils aus einem Blatt bestehen, wobei die Einstellung seiner Befestigungspunkte (13) unter der Platte (1) die Krümmung bestimmt.

11. Zweirad nach einem der vorhergehenden Ansprüche, dadurch gekennzeichnet, daß ein Lenker zur Steuerung der Richtung vorgesehen ist, der um die Achse (6) eines Rades (7) schwenkbar ist.

12. Zweirad nach Anspruch 11, dadurch gekennzeichnet, daß der Lenker aus zwei parallelen Armen und aus einem gemeinsamen, parallel zur Achse (6) des Rades (7) verlaufenden Arm besteht.

13. Zweirad nach einem der vorhergehenden Ansprüche, dadurch gekennzeichnet, daß ein Karosserieteil (16) vorgesehen ist, das das Hinterrad (7) umgibt, um als Abstützpunkt für den Passagier zu dienen und daß es sich über die durch den Abstützpunkt verlaufende Vertikalebene hinaus bis zum Boden des Hinterrades erstreckt.

14. Zweirad nach einem der vorhergehenden Ansprüche, dadurch gekennzeichnet, daß die Platte (1) mit einem rutschfesten Netz (18) abgedeckt ist, in dessen Maschen die Enden der Gleitkufen (12) eingebunden sind.

**Claims**

1. A bicycle vehicle constituted by a passenger-receiving footplate (1) mounted on a rear wheel (7) and a front wheel (7), the bicycle vehicle being characterized in that each wheel (7) is connected to the footplate (1) by arms (3) pivotally mounted firstly about pins (2) which are fixed to the footplate (1) and secondly about the ends (5) of the axle (6) of the wheel (6), thereby defining a trapezium.

2. A bicycle according to claim 1, characterized in that the small base of said trapezium is constituted by the axle (6) of the wheel (7).

3. A bicycle according to claim 1 or 2, characterized in that the pivot axes (2, 4) of the connecting arms (3) may be inclined relative to the horizontal.

4. A bicycle according to any one of claims 1, 2, or 3, characterized in that cursors (5) connecting the axles (6) of the wheels (7) to the rods (4) of the arms (3) are adjustable in position on the rods (4).

5. A bicycle according to any preceding claim, characterized in that an arm (3) extending beyond its pin (2) in the form of an extension (P) is connected to the diametrically opposite arm (3) by means of a rod or a cable (14) which is mounted to pivot freely at the ends of the extensions (P).

6. A bicycle according to any one of claims 1 to 4, characterized in that the footplate (1) carries a base (8) for a hinged mast (9), with an abutment (10) serving to hold the mast.

7. A bicycle according to any one of claims 1 to 4, characterized in that it includes a horizontally pivotable brake (11) at the rear of the footplate (1) for coming into contact with the thread of the wheel (7) when the passanger applies foot pressure thereto.

8. A bicycle according to any one of claims 1 to 4, characterized in that it includes at least one skid (12) fixed laterally beneath the footplate (1) and resting flat against the ground when the footplate is tilted.

9. A bicycle according to claim 8, characterized in that the skids (12) are capable of being lowered beneath the footplate (1).

10. A bicycle according to claim 8 or 9, characterized in that skids (12) are made of sheets such that moving their fixing points (13) towards each other beneath the footplate causes them to curve.

11. A bicycle according to any preceding claim, characterized in that it includes a steering column (15) mounted pivotally about the axle (6) of a wheel (7) for steering purposes.

12. A bicycle according to claim 11, characterized in that the steering column comprises two parallel arms and a common arm parallel to the axle (6) of the wheel (7).

13. A bicycle according to any preceding claim, characterized in that it includes a mudguard (16) covering the rear wheel (7) in order to serve as a bearing point for the passenger and extending beyond the vertical passing through the point at which the rear wheel touches the ground.

14. A bicycle according to any preceding claim, characterized in that the footplate (1) is covered with a non-clip net (18) with the ends of the skids (12) engaging in the mesh of the net.

FIG.1

FIG.2

FIG.3

FIG.4

**FIG.5**

**FIG.6**

**FIG.7**